# EUROPEAN PATENT SPECIFICATION

(11) **EP 4 120 216 B1**
(45) Date of publication and mention of the grant of the patent: **21.02.2024**
(21) Application number: 20924286.6
(22) Date of filing: 12.03.2020
(51) Int. Cl.: G06Q 10/02, G06Q 50/30, G08G 1/005, B64F 1/36, G07B 15/00, G16Y 10/40

(54) **STATUS NOTIFICATION DEVICE, STATUS NOTIFICATION METHOD, AND COMPUTER-READABLE RECORDING MEDIUM**
STATUSBENACHRICHTIGUNGSVORRICHTUNG, STATUSBENACHRICHTIGUNGSVERFAHREN UND COMPUTERLESBARES AUFZEICHNUNGSMEDIUM
DISPOSITIF DE NOTIFICATION D'ÉTAT, PROCÉDÉ DE NOTIFICATION D'ÉTAT ET SUPPORT D'ENREGISTREMENT LISIBLE PAR ORDINATEUR

(43) Date of publication of application: 18.01.2023
(73) Proprietor: NEC Corporation, 108-8001 Tokyo (JP)
(72) Inventor: KOBAYASHI, Masanori, Tokyo 108-8001 (JP); ICHIKAWA, Akihiko, Tokyo 108-8001 (JP)
(74) Representative: Betten & Resch
(86) International application number: PCT/JP2020/010950
(87) International publication number: WO 2021/181635

(56) References cited:
- EP-A1- 2 662 259
- WO-A1-2012/093618
- JP-A- 2019 086 894

## Description

### TECHNICAL FIELD

The present invention relates to a status notification apparatus, a status notification method, and a program for realizing the status notification apparatus is recorded.

### BACKGROUND ART

Many display devices that display flight information such as the departure and arrival times of aircraft are installed in airport facilities. Passengers who are to board an aircraft look at the display device to check the departure and arrival times of the aircraft they are boarding, and people who are there to greet the passengers, such as family members, can check what time the aircraft will arrive. For example, in Patent Document 1, information on whether the aircraft has arrived, immigration procedures have been completed, baggage is being received, and the like is displayed on the display device, and changes in the state of the passengers after the aircraft has landed are displayed in an easily-understandable manner.

### LIST OF RELATED ART DOCUMENTS

### PATENT DOCUMENT

EP2662259 relates to a travel process prediction system and a computer program for predicting a process related to time required for travelling with a travelling means such as an airplane. A fingerprtint is used as biological information.

Patent Document 1: Japanese Patent Laid-Open Application No. 2018-92429

### SUMMARY OF INVENTION

### PROBLEMS TO BE SOLVED BY THE INVENTION

In Patent Document 1, the status of the passenger can be ascertained for each aircraft. However, even among passengers on the same aircraft, for example, there is a time difference in reception of baggage, and therefore it is difficult for a person who is there to greet a passenger to accurately ascertain the status of how long it will take the passenger to be greeted to come out of the arrival port and the like.

An example of an object of the present invention is to provide a status notification apparatus, a status notification method, and a program, according to which a person concerned with a passenger of a vehicle at an arrival destination can ascertain the movement status of the passenger.

### MEANS FOR SOLVING THE PROBLEMS

In order to achieve the above-described object, a status notification apparatus according to an aspect of the present invention includes:
a biological information acquisition unit configured to acquire biological information of a passenger of a vehicle, the biological information having been acquired at a departure and arrival facility of the vehicle;
an information acquisition unit configured to acquire, from a storage device in which arrival destination information regarding an arrival destination of the vehicle, the biological information of the passenger, and identification information for identifying the passenger are stored in association with each other in advance, the identification information and the arrival destination information corresponding to the acquired biological information;
a status acquisition unit configured to acquire a movement status of the passenger; and
a notification unit configured to perform notification of the acquired movement status and the acquired identification information to a person concerned with the passenger at an arrival destination based on the acquired arrival destination information.

In order to achieve the above-described object, a status notification method according to an aspect of the present invention includes:
a step of acquiring biological information of a passenger of a vehicle, the biological information having been acquired at a departure and arrival facility of the vehicle;
a step of acquiring, from a storage device in which arrival destination information regarding an arrival destination of the vehicle, the biological information of the passenger, and identification information for identifying the passenger are stored in association with each other in advance, the identification information and the arrival destination information corresponding to the acquired biological information;
a step of acquiring a movement status of the passenger; and
a step of performing notification of the acquired movement status and the acquired identification information to a person concerned with the passenger at an arrival destination based on the acquired arrival destination information.

Also, in order to achieve the above-described object, a program according to an aspect of the present invention including instructions that cause a computer to carry out:
a step of acquiring biological information of a passenger of a vehicle, the biological information having been acquired at a departure and arrival facility of the vehicle;
a step of acquiring, from a storage device in which arrival destination information regarding an arrival destination of the vehicle, the biological information of the passenger, and identification information for identifying the passenger are stored in association with each other in advance, the identification information and the arrival destination information corresponding to the acquired biological information;
a step of acquiring a movement status of the passenger; and
a step of performing notification of the acquired movement status and the acquired identification information to a person concerned with the passenger at an arrival destination based on the acquired arrival destination information.

### ADVANTAGEOUS EFFECTS OF THE INVENTION

According to the present invention, a person concerned with a passenger of a vehicle at an arrival destination can ascertain the movement status of the passenger.

### BRIEF DESCRIPTION OF THE DRAWINGS

FIG. 1 is a block diagram showing a configuration of a status notification apparatus.
FIG. 2 is a block diagram showing a specific configuration of the status notification apparatus.
FIG. 3 is a diagram for illustrating status notification of a passenger performed by the status notification apparatus.
FIG. 4 is a diagram showing an example of movement status data.
FIG. 5 is a flowchart showing operation of the status notification apparatus.
FIG. 6 is a block diagram showing an example of a computer that realizes the status notification apparatus.

### EXAMPLE EMBODIMENTS

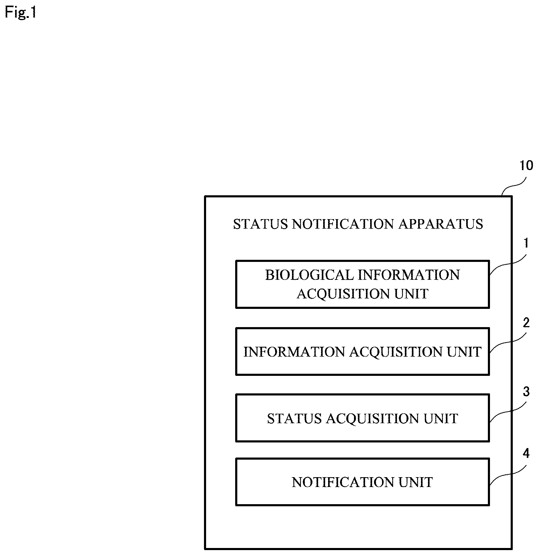

Hereinafter, a status notification apparatus, a status notification method, and a program according to an example embodiment of the present invention will be described with reference to FIGS. 1 to 6.

### [Apparatus configuration]

First, the configuration of the status notification apparatus according to the present example embodiment will be described with reference to FIG. 1. FIG. 1 is a block diagram showing a configuration of the status notification apparatus.

The status notification apparatus 10 is an apparatus that notifies a person concerned with a passenger at an arrival destination of a vehicle of the movement status of the passenger of the vehicle at the departure and arrival facility of the vehicle. Vehicles include aircraft, trains, buses, and ships. Departure and arrival facilities include airports, train stations, bus terminals, and ports. The person concerned is, for example, a person who is to greet the passenger at the arrival destination.

The status notification apparatus 10 includes a biological information acquisition unit 1, an information acquisition unit 2, a status acquisition unit 3, and a notification unit 4.

The biological information acquisition unit 1 acquires biological information of the passenger of the vehicle, the biological information having been acquired at the departure/arrival facility of the vehicle. The biological information includes face image data, fingerprint data, vocal cord data, iris data, and the like.

The information acquisition unit 2 acquires, from a storage apparatus in which arrival destination information regarding the arrival destination of the vehicle and identification information identifying the passenger are stored in association with each other in advance, the identification information and the arrival destination information corresponding to the acquired biological information.

The status acquisition unit 3 acquires the movement status of the passenger. The movement status will be described in detail later.

Based on the arrival destination information acquired by the information acquisition unit 2, the notification unit 4 notifies a person concerned with the passenger at the arrival destination of the movement status acquired by the status acquisition unit 3 and the identification information acquired by the information acquisition unit 2. The person concerned will be described in detail later.

According to the status notification apparatus 10, a person concerned with the passenger at the arrival destination can ascertain the movement status of the passenger. For example, the person concerned can ascertain the detailed movement status of the passenger, such as the passenger undergoing the process of boarding the vehicle, having boarded the vehicle, and having disembarked from the vehicle.

Next, the configuration of the status notification apparatus 10 in the present example embodiment will be described more specifically. Hereinafter, the vehicle is described as an aircraft and the departure and arrival facility is described as an airport. Also, the biological information is described as face image data.

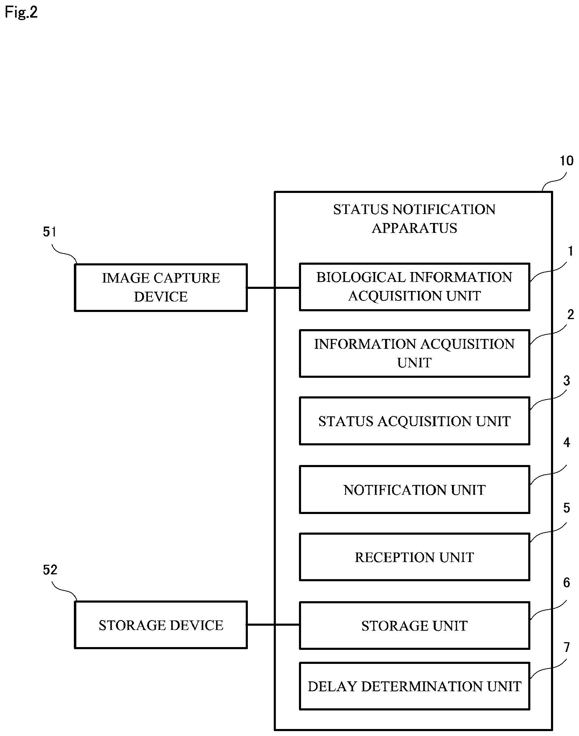

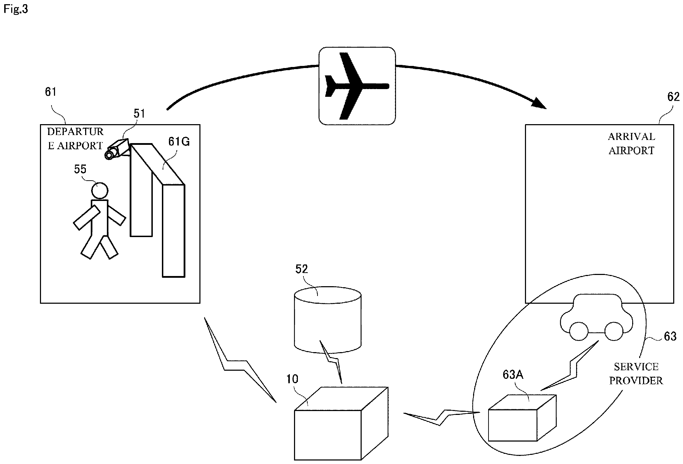

FIG. 2 is a block diagram showing a specific configuration of the status notification apparatus 10. FIG. 3 is a diagram for illustrating movement status notification of the passenger 55 performed by the status notification apparatus 10.

The status notification apparatus 10 is connected to an image capture device 51 and a storage device 52 so as to be capable of data communication therewith.

The image capture device 51 is a biological information acquisition device that acquires biological information of the passenger 55. In this example, the image capture device 51 is installed in the airport facility and captures an image of the face of the passenger 55. The image capture device 51 is installed, for example, at a check-in counter, a boarding gate, a baggage depository, an arrival gate, a baggage claim area, or the like, which are locations where the passenger 55 performs procedures in the airport. FIG. 3 shows a state in which the image capture device 51 is provided at a boarding gate 61G of a departure airport 61 and captures an image of the face of the passenger 55 passing through the boarding gate 61G. Note that although FIG. 3 shows an example in which the image capture device 51 is installed at the departure airport 61, the image capture device 51 is installed at each touch point (check-in, baggage deposit, identity verification before security inspection, and departure inspection at the departure airport 61, and immigration inspection, customs procedures, arrival gates, and the like at an arrival airport 62). Also, an image of the passenger's face is captured at each touch point.

The storage device 52 stores the face image data of the passenger 55 and the identification information of the passenger 55 in association with each other. The identification information includes unique information and flight information. The unique information is unique information of the passenger 55, and examples thereof include the name, nationality, and passport number of the passenger 55. Flight information is information such as the departure and arrival times and the destination of the aircraft.

For example, at the time of check-in at the departure airport, the passport of passenger 55 and the face image data are matched to confirm the identity, and then the face image data and the identification information of the unique information and the flight information are registered in the storage device 52 in association with each other. The passenger 55 is registered, for example, using a dedicated terminal installed at the airport. This makes it possible to confirm the identity of the passenger 55 by capturing an image of the face of the passenger 55 at each touch point after check-in. At each touch point, when an image of a face is captured, the face image data of the passenger 55 is selected from the storage device 52 through one-to-N matching using the captured face image data. By acquiring the unique information and the flight information corresponding to the selected face image data, identity confirmation is performed at each touch point. Due to being able to confirm the identity through face recognition at each touch point, it is possible to acquire the procedure status of the passenger 55.

The status notification apparatus 10 or another apparatus may perform various procedures through face recognition and processing for performing storage in the storage device. Also, in the above description, the face image data, the unique information, and the flight information are registered in the storage device 52 at the time of check-in, but the timing of registration in the storage device 52 is not limited to this. The passenger 55 may also register the face image data, the unique information, and the flight information in advance from a dedicated application of a mobile terminal such as a smartphone, a dedicated website, or the like.

The status notification apparatus 10 and the storage device 52 are connected to a network, and the installation location may be in the airport or in a facility other than the airport.

The status notification apparatus 10 further includes a reception unit 5, a storage unit 6, and a delay determination unit 7 in addition to the biological information acquisition unit 1, the information acquisition unit 2, the status acquisition unit 3, and the notification unit 4.

The reception unit 5 receives the registration of the arrival destination information of the aircraft by the passenger 55 of the aircraft. The passenger 55 registers the arrival destination information using, for example, a dedicated application, a dedicated site, or a dedicated terminal. The arrival destination information is various types of information scheduled by the passenger 55 after the arrival of the aircraft. For example, the arrival destination information is information on the scheduled arrival airport, the scheduled arrival time, a taxi company to be used at the arrival airport 62, the tour company for which participation is scheduled, and the like.

The storage unit 6 stores the arrival destination information received by the reception unit 5 in the storage device 52. The storage device 52 stores the face image data and the identification information in association with each other in advance. The storage unit 6 stores the arrival destination information in the storage device 52 in association with the face image data and the identification information corresponding to the passenger 55 for which the arrival destination information was registered.

Note that when registering the arrival destination information, the passenger 55 may input his or her face image data to register the arrival destination information, or may input identification information such as a name to perform registration. The storage unit 6 stores the arrival destination information in the storage device 52 based on the face image data or the identification information input at the time of registration of the arrival destination information.

Note that the device for registering the registration destination information may be a device other than the status notification apparatus 10.

The biological information acquisition unit 1 acquires the face image data of the passenger 55 from the image capture device 51. For example, as shown in FIG. 3, when the passenger 55 passes through the boarding gate 61G, the image capture apparatus 51 captures an image of the face of the passenger 55. The biological information acquisition unit 1 acquires the face image data of the passenger 55 passing through the boarding gate 61G. Note that, as described above, the image capture device 51 is installed at each touch point. The biological information acquisition unit 1 acquires the face image data from each image capture device 51 each time the image capture devices 51 installed at each touch point acquire the face image data.

The information acquisition unit 2 acquires the identification information and the arrival destination information corresponding to the face image data acquired by the biological information acquisition unit 1 from the storage device 52. When the biological information acquisition unit 1 acquires the face image data, the information acquisition unit 2 selects the face image data from the storage device 52 through one-to-N matching using the face image data. The information acquisition unit 2 acquires the identification information and the arrival destination information corresponding to the selected face image data.

The status acquisition unit 3 acquires the movement status of the passenger 55 in the face image data acquired by the biological information acquisition unit 1. The movement status is, for example, the procedure status of the passenger 55 at the airport (check-in, baggage deposit, security inspection, departure inspection, boarding, etc.). The movement status may also include the progress status of each procedure, such as the progress of immigration inspection and customs procedures at the arrival airport 62. The status acquisition unit 3 generates movement status data, which includes identification information and the movement status.

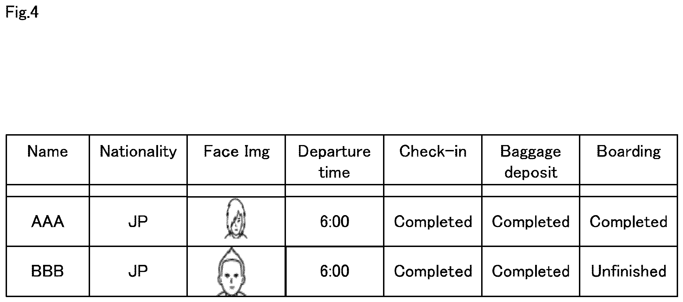

FIG. 4 is a diagram showing an example of movement status data.

In the movement status data, the face image data and the procedure status at the airport are associated with the name and the nationality of the passenger 55, based on the identification information. The status acquisition unit 3 updates the movement status data each time the movement status is acquired. For example, when an image of the face of the passenger 55 is captured at the check-in counter, the status acquisition unit 3 updates the movement status data assuming that the check-in procedure is complete. Furthermore, when an image of the face of the passenger 55 is captured at the baggage depository, the status acquisition unit 3 updates the movement status data assuming that baggage deposit is complete.

In this manner, the status acquisition unit 3 updates the movement status data for each passenger 55 as needed.

Note that the status acquisition unit 3 may also acquire the procedure status of various procedures using the above-described face recognition and update the movement status data.

The notification unit 4 notifies the person concerned with the passenger 55 at the arrival airport 62 of the movement status data based on the arrival destination information. The information acquisition unit 2 acquires a notification destination from the arrival destination information. The person concerned is, for example, a service provider 63 for a service that the passenger 55 is trying to use at the arrival airport. In FIG. 3, a taxi company that the passenger 55 is to use upon arriving at arrival airport 62 is shown as an example of the service provider 63.

The notification unit 4 notifies a management server 63A owned by the service provider 63 of the movement status data. Then, the movement status data is transferred from the management server 63A to a mobile terminal owned by an employee, an in-vehicle device, or the like. Note that the status notification apparatus 10 may also be configured to directly send the movement status data to the mobile terminal of an employee who is to greet the passenger 55 at the airport.

The notification unit 4 notifies the management server 63A of the movement status data at the timing when the image capture device 51 installed at each touch point acquires the face image data. More specifically, at each touch point, the procedure performed through face recognition is performed, and the movement status data is transmitted each time the procedure status of the passenger 55 is updated, that is, each time the movement status data acquired by the status acquisition unit 3 is updated.

Note that the timing of notification is not limited to this. For example, the notification unit 4 may receive the setting of the notification timing by the service provider 63 and perform notification at the set timing. If the service provider 63 sets, for example, "automatically perform notification when immigration is completed at the boarding gate 61G", the notification unit 4 may notify the service provider 63 when the passenger 55 passes through the touch point (boarding gate 61G).

As a result, the service provider 63 can ascertain the status of the passenger 55 to be greeted, such as whether the passenger 55 boarded the aircraft at the departure airport 61 or whether the passenger 55 received his or her baggage at the arrival airport 62. Also, if the progress status of each procedure is included in the travel status, the service provider 63 can estimate that the passenger 55 may be late for the scheduled arrival time even if the passenger 55 arrives at the arrival airport 62.

In addition to the movement status and the identification information, the notification unit 4 also transmits the face image data. In this case, the service provider to whom the notification is sent can confirm the face of the passenger 55, and therefore it is easier to find the passenger 55 when greeting the passenger 55.

Note that the service provider 63 may be a tour company for a tour in which the passenger 55 is to participate, or may be a hotel where the passenger 55 is to stay.

The delay determination unit 7 determines whether the arrival of the passenger 55 is late. If the scheduled arrival time is included in the arrival destination information acquired by the information acquisition unit 2, the delay determination unit 7 determines whether the current time is past the scheduled arrival time. If the current time is past the scheduled arrival time, the delay determination unit 7 determines that the arrival of the passenger 55 is late. In this case, the notification unit 4 notifies the service provider 63 of the delay.

### [Apparatus operation]

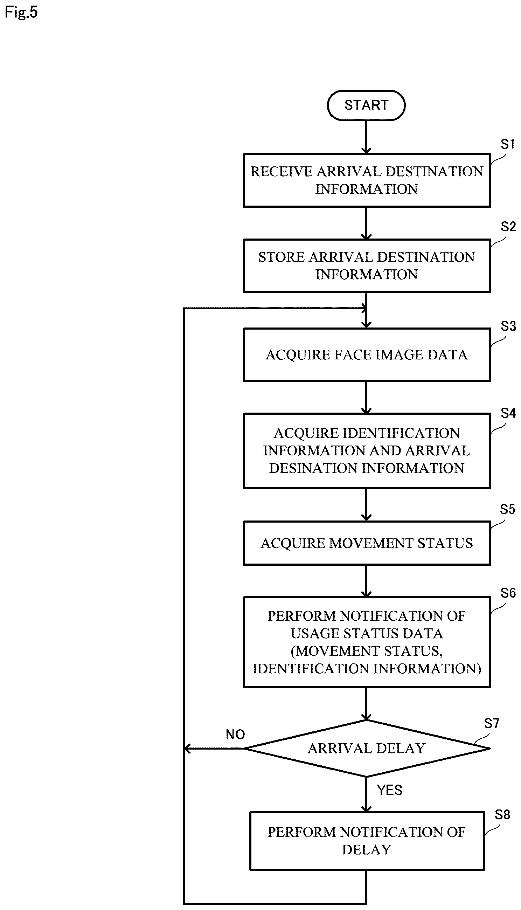

Next, the operation of the status notification apparatus 10 according to the present example embodiment will be described with reference to FIG. 5. FIG. 5 is a flowchart showing the operation of the status notification apparatus 10. In the following description, FIGS. 1 to 4 will be referred to as appropriate. Also, in the present example embodiment, the status notification method is implemented by causing the status notification apparatus 10 to operate. Therefore, the description of the status notification method in the present example embodiment is replaced with the following operation description of the status notification apparatus 10. Also, in the description of FIG. 5, the vehicle is an aircraft and the biological information is face image data.

As a premise, for example, it is assumed that the face image data of the passenger 55 and the identification information including the unique information and the flight information are registered in association with each other in the storage device 52 at the time of check-in at the departure airport.

Under this premise, the reception unit 5 receives the registration of the arrival destination information by the passenger 55 of the aircraft (S 1). The storage unit 6 stores the received arrival destination information in the storage device 52 in association with the face image data of the passenger 55 and the identification information (S2).

The biological information acquisition unit 1 acquires the face image data captured by the image capture device 51 installed at the touch point (S3). The information acquisition unit 2 acquires the identification information and the arrival destination information corresponding to the face image data from the storage device 52 (S4). The status acquisition unit 3 acquires the movement status of the passenger 55 (S5). Then, when the status acquisition unit 3 acquires the movement status, the status acquisition unit 3 generates and updates the movement status data shown in FIG. 4. The notification unit 4 notifies the service provider 63 at the arrival destination of the movement status data based on the acquired destination information (S6).

The delay determination unit 7 determines whether the arrival of the passenger 55 has been delayed according to whether or not the scheduled arrival time of the passenger 55 is past the current time (S7). If there is a delay (S7: YES), the notification unit 4 notifies the service provider 63 of the delay (S8). If there is no delay (S7: NO), the processing of S3 is executed.

Note that there is no particular limitation on the timing at which this flow ends. For example, the flow may end when the passenger 55 exits the arrival gate at the arrival airport 62, or it may end when the passenger 55 exits arrival airport 62. Also, when the status notification apparatus 10 performs notification in S6, the status notification apparatus 10 may predict how soon the passenger 55 will appear in front of the person concerned based on the movement status, and perform notification. For example, the average time taken from each touch point to the time of exiting the arrival gate at the arrival airport 62 is stored in advance, and the status notification apparatus 10 predicts and performs notification of the time from the current position of the passenger 55 based on the stored time.

In this manner, the service provider 63 can ascertain the current movement status of the passenger 55 due to the status notification apparatus 10 notifying the service provider 63 of the movement status of the passenger 55. Then, the service provider 63 can smoothly prepare for service provision accordingly. Also, due to being notified that the arrival of the passenger 55 is delayed, the service provider 63 can effectively utilize the time without wasting time in greeting the passenger 55.

Note that, in the present example embodiment, the movement status was the procedure status of the passenger 55, but there is no limitation thereto. The movement status may also be the operation status of the aircraft. In this case, the status acquisition unit 3 specifies the aircraft which the passenger 55 is to board based on the identification information, and acquires the operation status of the aircraft from a server of the airport that manages the aircraft. In the movement status, the status acquisition unit 3 may also include whether the aircraft will arrive earlier or later than scheduled, based on the flight status.

Also, as described above, the status acquisition unit 3 may include the progress status of each procedure in the movement status. For example, the progress of immigration inspection and customs procedures at the arrival airport 62 may also be included in the movement status. In this case, the service provider 63 can estimate that even if the passenger 55 arrives at the arrival airport 62, the passenger 55 may be late for the scheduled arrival time.

Also, the determination as to whether the passenger 55 is delayed is not limited to the above-described contents. If identification information based on an air ticket is registered and the identification information includes the scheduled arrival time of the aircraft, the delay determination unit 7 may determine a delay of the passenger 55 by comparing the scheduled arrival time and the current time.

Also, the installation location of the image capture device 51 is not particularly limited, and may be a passage in the facility, a bathroom, and the like. Furthermore, although the biological information acquisition device was an image capture device 51, if the biological information is information other than face image data, for example, fingerprint data, the biological information acquisition device is a fingerprint sensor.

Furthermore, the status notification apparatus 10 may allow the service provider 63 to check a list including the progress status (completed or unfinished) of each touch point (procedure: check-in, baggage deposit, boarding, ...) of each of a plurality of passengers designated by the service provider 63. For example, the status notification apparatus 10 generates data obtained by listing the statuses of each designated passenger as indicated by the data in FIG. 4, and performs notification of the data to the service provider 63. By checking this list, the service provider 63 can ascertain the procedure status for each passenger. Also, if the procedure is delayed for one or more of a plurality of designated passengers, the status notification apparatus 10 may extract and perform notification of the progress status of that passenger.

### [Program]

The program in this example embodiment may be any program that causes a computer to execute steps S1 to S8 shown in FIG. 5. By installing and executing this program on a computer, the status notification apparatus 10 and the status notification method according to the present example embodiment can be realized. In this case, the processor of the computer functions as the biological information acquisition unit 1, the information acquisition unit 2, the status acquisition unit 3, the notification unit 4, the reception unit 5, and the storage unit 6, and performs processing.

Also, the program according to the present example embodiment may also be executed by a computer system constructed by a plurality of computers. In this case, for example, each computer may function as one of the biological information acquisition unit 1, the information acquisition unit 2, the status acquisition unit 3, the notification unit 4, the reception unit 5, and the storage unit 6.

In addition to general-purpose PCs, examples of computers include smartphones and tablet terminal devices.

### (Physical configuration of apparatus)

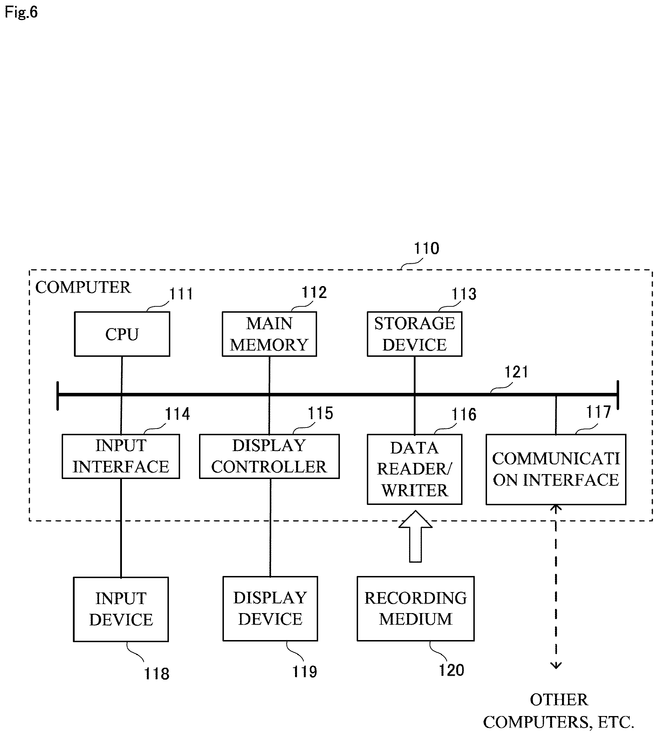

Here, a computer that realizes the status notification apparatus 10 by executing the program according to the present example embodiment will be described with reference to FIG. 6. FIG. 6 is a block diagram showing an example of a computer that realizes the status notification apparatus 10.

As shown in FIG. 6, the computer 110 includes a CPU (Central Processing Unit) 111, a main memory 112, a storage device 113, an input interface 114, a display controller 115, a data reader/writer 116, and a communication interface 117. These units are connected to each other via a bus 121 so as to be capable of data communication. Note that the computer 110 may include a GPU (Graphics Processing Unit) or an FPGA (Field-Programmable Gate Array) in addition to the CPU 111 or in place of the CPU 111.

The CPU 111 loads the program (codes) of the present example embodiment stored in the storage device 113 into the main memory 112, and executes the program in a predetermined order to perform various computations. The main memory 112 is typically a volatile storage device such as a DRAM (Dynamic Random Access Memory). Also, the program according to the present example embodiment is provided in a state of being stored in a computer readable recording medium 120. Note that the program according to the present example embodiment may also be distributed on the Internet, which is connected to via the communication interface 117.

Also, specific examples of the storage device 113 may include a semiconductor storage device such as a flash memory in addition to a hard disk. The input interface 114 mediates data transmission between the CPU 111 and input devices 118 such as a keyboard and mouse. The display controller 115 is connected to a display device 119 and controls the display on the display device 119. The data reader/writer 116 mediates data transmission between the CPU 111 and the recording medium 120, reads out the program from the recording medium 120, and writes the result of processing performed by the computer 110 in the recording medium 120. The communication interface 117 mediates data transmission between the CPU 111 and another computer.

Specific examples of the recording medium 120 include a general-purpose semiconductor storage device such as a CF (Compact Flash (registered trademark)) or an SD (Secure Digital), a magnetic storage medium such as a Flexible Disk, and an optical storage medium such as a CD-ROM (Compact Disk Read Only Memory).

A portion or all of the above-described example embodiment can be expressed by (Supplementary note 1) to (Supplementary note 21) described below, but is not limited thereto.

### (Supplementary note 1)

A status notification apparatus including:
a biological information acquisition unit configured to acquire biological information of a passenger of a vehicle, the biological information having been acquired at a departure and arrival facility of the vehicle;
an information acquisition unit configured to acquire, from a storage device in which arrival destination information regarding an arrival destination of the vehicle, the biological information of the passenger, and identification information for identifying the passenger are stored in association with each other in advance, the identification information and the arrival destination information corresponding to the acquired biological information;
a status acquisition unit configured to acquire a movement status of the passenger; and
a notification unit configured to perform notification of the acquired movement status and the acquired identification information to a person concerned with the passenger at an arrival destination based on the acquired arrival destination information.

### (Supplementary note 2)

The status notification apparatus according to supplementary note 1,
in which the vehicle is an aircraft, and
the arrival and departure facility is an airport.

### (Supplementary note 3)

The status notification apparatus according to supplementary note 2,
in which the biological information acquisition unit acquires the biological information from a biological information acquisition device installed at a boarding gate, a baggage depository, an arrival gate, or a baggage claim area, and
the status acquisition unit acquires the movement status based on a location at which the biological information was acquired by the biological information acquisition device.

### (Supplementary note 4)

The status notification apparatus according to any one of supplementary notes 1 to 3,
in which the arrival destination information includes a scheduled arrival time of the passenger,
the status notification apparatus further includes a delay determination unit configured to determine whether arrival of the passenger is delayed based on the scheduled arrival time, and
the notification unit performs notification of a delay of the passenger if the arrival of the passenger is delayed.

### (Supplementary note 5)

The status notification apparatus according to any one of supplementary notes 1 to 4,
in which the biological information is face image data.

### (Supplementary note 6)

The status notification apparatus according to supplementary note 5,
in which the notification unit performs notification of the acquired face image data.

### (Supplementary note 7)

The status notification apparatus according to any one of supplementary notes 1 to 6,
in which the arrival destination information includes information regarding the person concerned, and
the notification unit performs notification to a notification destination obtained based on the information regarding the person concerned.

### (Supplementary note 8)

A status notification method including:
a step of acquiring biological information of a passenger of a vehicle, the biological information having been acquired at a departure and arrival facility of the vehicle;
a step of acquiring, from a storage device in which arrival destination information regarding an arrival destination of the vehicle, the biological information of the passenger, and identification information for identifying the passenger are stored in association with each other in advance, the identification information and the arrival destination information corresponding to the acquired biological information;
a step of acquiring a movement status of the passenger; and
a step of performing notification of the acquired movement status and the acquired identification information to a person concerned with the passenger at an arrival destination based on the acquired arrival destination information.

### (Supplementary note 9)

The status notification method according to supplementary note 8,
in which the vehicle is an aircraft, and
the arrival and departure facility is an airport.

### (Supplementary note 10)

The status notification method according to supplementary note 9,
in which, in the step of acquiring the biological information, the biological information is acquired from a biological information acquisition device installed at a boarding gate, a baggage depository, an arrival gate, or a baggage claim area, and
in the step of acquiring the movement status, the movement status is acquired based on a location at which the biological information was acquired by the biological information acquisition device.

### (Supplementary note 11)

The status notification method according to any one of supplementary notes 8 to 10,
in which the arrival destination information includes a scheduled arrival time of the passenger,
the status notification method further includes a step of determining whether arrival of the passenger is delayed based on the scheduled arrival time, and
in the step of notifying the person concerned, notification of a delay of the passenger is performed if arrival of the passenger is delayed.

### (Supplementary note 12)

The status notification method according to any one of supplementary notes 8 to 11,
in which the biological information is face image data.

### (Supplementary note 13)

The status notification method according to supplementary note 12,
in which, in the step of notifying the person concerned, notification of the acquired face image data is performed.

### (Supplementary note 14)

The status notification method according to any one of supplementary notes 8 to 13,
in which the arrival destination information includes information regarding the person concerned, and
in the step of notifying the person concerned, notification is performed to a notification destination obtained based on information regarding the person concerned.

### (Supplementary note 15)

A program including instructions that cause a computer to carry out:
a step of acquiring biological information of a passenger of a vehicle, the biological information having been acquired at a departure and arrival facility of the vehicle;
a step of acquiring, from a storage device in which arrival destination information regarding an arrival destination of the vehicle, the biological information of the passenger, and identification information for identifying the passenger are stored in association with each other in advance, the identification information and the arrival destination information corresponding to the acquired biological information;
a step of acquiring a movement status of the passenger; and
a step of performing notification of the acquired movement status and the acquired identification information to a person concerned with the passenger at an arrival destination based on the acquired arrival destination information.

### (Supplementary note 16)

The program according to supplementary note 15,
in which the vehicle is an aircraft, and
the arrival and departure facility is an airport.

### (Supplementary note 17)

The program according to supplementary note 16,
in which, in the step of acquiring the biological information, the biological information is acquired from a biological information acquisition device installed at a boarding gate, a baggage depository, an arrival gate, or a baggage claim area, and
in the step of acquiring the movement status, the movement status is acquired based on a location at which the biological information was acquired by the biological information acquisition device.

### (Supplementary note 18)

The program according to any one of supplementary notes 15 to 17,
in which the arrival destination information includes a scheduled arrival time of the passenger,
the program further includes instructions that cause the computer to carry out
a step of determining whether arrival of the passenger is delayed based on the scheduled arrival time, and
in the step of notifying the person concerned, notification of a delay of the passenger is performed if arrival of the passenger is delayed.

### (Supplementary note 19)

The program according to any one of claims 15 to 18,
in which the biological information is face image data.

### (Supplementary note 20)

The program according to supplementary note 19,
in which, in the step of notifying the person concerned, notification of the acquired face image data is performed.

### (Supplementary note 21)

The program according to any one of claims 15 to 20,
in which the arrival destination information includes information regarding the person concerned, and
in the step of notifying the person concerned, notification is performed to a notification destination obtained based on information regarding the person concerned.

### LIST OF REFERENCE SIGNS

- 1: Biological information acquisition unit
- 2: Information acquisition unit
- 3: Status acquisition unit
- 4: Notification unit
- 5: Reception unit
- 6: Storage unit
- 7: Delay determination unit
- 10: Status notification device
- 51: Image capture device
- 52: Storage device
- 55: Passenger
- 63: Service provider
- 110: Computer
- 111: CPU
- 112: Main memory
- 113: Storage device
- 114: Input interface
- 115: Display controller
- 116: Data recorder/writer
- 117: Communication interface
- 118: Input device
- 119: Display device
- 120: Recording medium
- 121: Bus

## Claims

1. A status notification apparatus **characterised by**:
a biological information acquisition unit (1) configured to acquire, as biological information, face image data of a passenger of a vehicle, the face image data having been acquired at each of a plurality of locations where respective procedures take place within a departure and arrival facility of the vehicle;
an information acquisition unit (2) configured to acquire, from a storage device (52) in which, per passenger, arrival destination information regarding an arrival destination of the vehicle, face image data of the passenger, and identification information for identifying the passenger are stored in association with each other in advance, the identification information and the arrival destination information corresponding to the face image data that matches the acquired face image data;
a status acquisition unit (3) configured to acquire a movement status of the passenger; and
a notification unit (4) configured to perform notification of the acquired movement status and the acquired identification information to a person concerned with the passenger at an arrival destination based on the acquired arrival destination information,
wherein the status acquisition unit (3) is configured, each time the face image data is acquired, to update the movement status, and
wherein the notification unit (4) is configured to perform notification of the acquired face image data.

2. The status notification apparatus according to claim 1,
wherein the vehicle is an aircraft, and
the arrival and departure facility is an airport.

3. The status notification apparatus according to claim 2,
wherein the biological information acquisition unit (1) acquires the face image data from an image capture device (51) installed at a boarding gate, a baggage depository, an arrival gate, or a baggage claim area, and
the status acquisition unit (3) acquires the movement status based on a location at which the face image data was acquired by the image capture device (51).

4. The status notification apparatus according to any one of claims 1 to 3,
wherein the arrival destination information includes a scheduled arrival time of the passenger,
the status notification apparatus further comprises a delay determination unit (7) configured to determine whether arrival of the passenger is delayed based on the scheduled arrival time, and
the notification unit (4) performs notification of a delay of the passenger if arrival of the passenger is delayed.

5. The status notification apparatus according to any one of claims 1 to 4,
wherein the arrival destination information includes information regarding the person concerned, and
the notification unit (4) performs notification to a notification destination obtained based on the information regarding the person concerned.

6. A status notification method **characterised by**:
acquiring, as biological information, face image data of a passenger of a vehicle, the face image data having been acquired at each of a plurality of locations where respective procedures take place within a departure and arrival facility of the vehicle;
acquiring, from a storage device (52) in which, per passenger, arrival destination information regarding an arrival destination of the vehicle, the face image data of the passenger, and identification information for identifying the passenger are stored in association with each other in advance, the identification information and the arrival destination information corresponding to the face image data that matches the acquired face image data;
acquiring a movement status of the passenger; and
performing notification of the acquired movement status, the acquired identification information, and the acquired image data to a person concerned with the passenger at an arrival destination based on the acquired arrival destination information,
wherein the acquiring a movement status of the passenger comprises updating the movement status each time the face image data is acquired.

7. The status notification method according to claim 6,
wherein the vehicle is an aircraft, and
the arrival and departure facility is an airport.

8. The status notification method according to claim 7,
wherein, when acquiring the face image data, the face image data is acquired from an image capture device (51) installed at a boarding gate, a baggage depository, an arrival gate, or a baggage claim area, and
when acquiring the movement status, the movement status is acquired based on a location at which the face image data was acquired by the image capture acquisition device (51).

9. The status notification method according to any one of claims 6 to 8,
wherein the arrival destination information includes a scheduled arrival time of the passenger,
the status notification method further comprises determining whether arrival of the passenger is delayed based on the scheduled arrival time, and
when notifying the person concerned, notification of a delay of the passenger is performed if arrival of the passenger is delayed.

10. The status notification method according to any one of claims 6 to 9,
wherein the arrival destination information includes information regarding the person concerned, and
when notifying the person concerned, notification is performed to a notification destination obtained based on information regarding the person concerned.

11. A program for causing a computer to execute the method of any of claims 6 to 10.

## Patentansprüche

1. Status-Benachrichtigungsvorrichtung, **gekennzeichnet durch**:
eine Einheit zur Erlangung biologischer Information (1), welche Einheit konfiguriert ist, um Gesichtsbilddaten eines Fahrgastes eines Fahrzeugs als biologische Information zu erlangen, wobei die Gesichtsbilddaten bei jedem einer Vielzahl von Standorten erlangt worden sind, wo jeweilige Prozeduren innerhalb einer Abreise- und Ankunftseinrichtung des Fahrzeugs erfolgen;
eine Informations-Erlangungseinheit (2), die konfiguriert ist, um aus einer Speichervorrichtung (52), in der, pro Fahrgast, Ankunftszielinformation bezüglich eines Ankunftsziels des Fahrzeugs, Gesichtsbilddaten des Fahrgastes und Identifikationsinformation zum Identifizieren des Fahrgastes in Verbindung miteinander im Voraus gespeichert sind, die Identifikationsinformation und die Ankunftszielinformation entsprechend den Gesichtsbilddaten zu erlangen, die mit den erlangten Gesichtsbilddaten übereinstimmen;
eine Status-Erlangungseinheit (3), die konfiguriert ist, um einen Bewegungsstatus des Fahrgastes zu erlangen; und
eine Benachrichtigungseinheit (4), die konfiguriert ist, um eine Benachrichtigung über den erlangten Bewegungsstatus und die erlangte Identifikationsinformation zu einer sich mit dem Fahrgast befassenden Person an einem Ankunftsziel basierend auf der erlangten Ankunftszielinformation durchzuführen,
wobei die Status-Erlangungseinheit (3) konfiguriert ist, um den Bewegungsstatus jedes Mal zu aktualisieren, wenn die Gesichtsbilddaten erlangt werden, und
wobei die Benachrichtigungseinheit (4) konfiguriert ist, um eine Benachrichtigung über die erlangten Gesichtsbilddaten durchzuführen.

2. Status-Benachrichtigungsvorrichtung nach Anspruch 1,
wobei das Fahrzeug ein Flugzeug ist und
die Ankunfts- und Abreiseeinrichtung ein Flughafen ist.

3. Status-Benachrichtigungsvorrichtung nach Anspruch 2,
wobei die Einheit zur Erlangung biologischer Information (1) die Gesichtsbilddaten aus einer Bilderfassungsvorrichtung (51) erlangt, die an einem Flugsteig, einer Gepäckaufbewahrung, einem Ankunftsgate oder einer Gepäckausgabe installiert ist, und
die Status-Erlangungseinheit (3) den Bewegungsstatus basierend auf einem Standort erlangt, bei dem die Gesichtsbilddaten durch die Bilderfassungsvorrichtung (51) erlangt wurden.

4. Status-Benachrichtigungsvorrichtung nach einem der Ansprüche 1 bis 3,
wobei die Ankunftszielinformation eine geplante Ankunftszeit des Fahrgastes enthält,
die Status-Benachrichtigungsvorrichtung weiterhin eine Verspätungs-Bestimmungseinheit (7) umfasst, die konfiguriert ist, um basierend auf der geplanten Ankunftszeit zu bestimmen, ob eine Ankunft des Fahrgastes verspätet ist, und
die Benachrichtigungseinheit (4) eine Benachrichtigung über eine Verspätung des Fahrgastes durchführt, wenn eine Ankunft des Fahrgastes verspätet ist.

5. Status-Benachrichtigungsvorrichtung nach einem der Ansprüche 1 bis 4,
wobei die Ankunftszielinformation Information bezüglich der sich befassenden Person enthält, und
die Benachrichtigungseinheit (4) eine Benachrichtigung zu einem basierend auf der Information bezüglich der sich befassenden Person erhaltenen Benachrichtigungsziel durchführt.

6. Status-Benachrichtigungsverfahren, **gekennzeichnet durch**:
Erlangen von Gesichtsbilddaten eines Fahrgastes eines Fahrzeugs als biologische Information, wobei die Gesichtsbilddaten bei jedem einer Vielzahl von Standorten erlangt worden sind, wo jeweilige Prozeduren innerhalb einer Abreise- und Ankunftseinrichtung des Fahrzeugs erfolgen;
Erlangen, aus einer Speichervorrichtung (52), in der, pro Fahrgast, Ankunftszielinformation bezüglich eines Ankunftsziels des Fahrzeugs, die Gesichtsbilddaten des Fahrgastes und Identifikationsinformation zum Identifizieren des Fahrgastes in Verbindung miteinander im Voraus gespeichert sind, der Identifikationsinformation und der Ankunftszielinformation entsprechend den Gesichtsbilddaten, die mit den erlangten Gesichtsbilddaten übereinstimmen;
Erlangen eines Bewegungsstatus des Fahrgastes; und
Durchführen einer Benachrichtigung über den erlangten Bewegungsstatus, die erlangte Identifikationsinformation und die erlangten Bilddaten zu einer sich mit dem Fahrgast befassenden Person an einem Ankunftsziel basierend auf der erlangten Ankunftszielinformation,
wobei das Erlangen eines Bewegungsstatus des Fahrgastes ein Aktualisieren des Bewegungsstatus jedes Mal, wenn die Gesichtsbilddaten erlangt werden, umfasst.

7. Status-Benachrichtigungsverfahren nach Anspruch 6,
wobei das Fahrzeug ein Flugzeug ist und
die Ankunfts- und Abreiseeinrichtung ein Flughafen ist.

8. Status-Benachrichtigungsverfahren nach Anspruch 7,
wobei die Gesichtsbilddaten, wenn die Gesichtsbilddaten erlangt werden, aus einer Bilderfassungsvorrichtung (51) erlangt werden, die an einem Flugsteig, einer Gepäckaufbewahrung, einem Ankunftsgate oder einer Gepäckausgabe installiert ist, und
wenn der Bewegungsstatus erlangt wird, der Bewegungsstatus basierend auf einem Standort erlangt wird, bei dem die Gesichtsbilddaten durch die Bilderfassungserlangungsvorrichtung (51) erlangt wurden.

9. Status-Benachrichtigungsverfahren nach einem der Ansprüche 6 bis 8,
wobei die Ankunftszielinformation eine geplante Ankunftszeit des Fahrgastes enthält,
das Status-Benachrichtigungsverfahren weiterhin ein Bestimmen basierend auf der geplanten Ankunftszeit umfasst, ob eine Ankunft des Fahrgastes verspätet ist, und
wenn die sich befassende Person benachrichtigt wird, eine Benachrichtigung über eine Verspätung des Fahrgastes durchgeführt wird, wenn eine Ankunft des Fahrgastes verspätet ist.

10. Status-Benachrichtigungsverfahren nach einem der Ansprüche 6 bis 9,
wobei die Ankunftszielinformation Information bezüglich der sich befassenden Person enthält, und
wenn die sich befassende Person benachrichtigt wird, eine Benachrichtigung zu einem basierend auf Information bezüglich der sich befassenden Person erhaltenen Benachrichtigungsziel durchgeführt wird.

11. Programm zum Veranlassen, dass ein Computer das Verfahren von einem der Ansprüche 6 bis 10 ausführt.

## Revendications

1. Appareil de notification d'état **caractérisé par** :
une unité d'acquisition d'informations biologiques (1) configurée pour acquérir, en tant qu'informations biologiques, des données d'image de visage d'un passager d'un véhicule, les données d'image de visage ayant été acquises au niveau de chacun d'une pluralité d'emplacements où des procédures respectives ont lieu dans une installation de départ et d'arrivée du véhicule ;
une unité d'acquisition d'informations (2) configurée pour acquérir, à partir d'un dispositif de stockage (52) dans lequel, pour chaque passager, les informations de destination d'arrivée concernant une destination d'arrivée du véhicule, les données d'image de visage du passager, et les informations d'identification pour identifier le passager sont stockées en association les unes avec les autres à l'avance, les informations d'identification et les informations de destination d'arrivée correspondant aux données d'image de visage qui concordent avec les données d'image de visage acquises ;
une unité d'acquisition d'état (3) configurée pour acquérir un état de mouvement du passager ; et
une unité de notification (4) configurée pour réaliser une notification de l'état de mouvement acquis et des informations d'identification acquises à une personne concernée par le passager au niveau d'une destination d'arrivée sur la base des informations de destination d'arrivée acquises,
dans lequel l'unité d'acquisition d'état (3) est configurée, à chaque fois que les données d'image de visage sont acquises, pour mettre à jour l'état de mouvement, et
dans lequel l'unité de notification (4) est configurée pour réaliser la notification des données d'image de visage acquises.

2. Appareil de notification d'état selon la revendication 1,
dans lequel le véhicule est un aéronef, et
l'installation d'arrivée et de départ est un aéroport.

3. Appareil de notification d'état selon la revendication 2,
dans lequel l'unité d'acquisition d'informations biologiques (1) acquiert les données d'image de visage à partir d'un dispositif de capture d'image (51) installé au niveau d'une porte d'embarquement, d'un dépôt de bagages, d'une porte d'arrivée, ou d'une zone de retrait des bagages, et
l'unité d'acquisition d'état (3) acquiert l'état de mouvement sur la base d'un emplacement au niveau duquel les données d'image de visage ont été acquises par le dispositif de capture d'image (51).

4. Appareil de notification d'état selon l'une quelconque des revendications 1 à 3,
dans lequel les informations de destination d'arrivée comportent une heure d'arrivée prévue du passager,
l'appareil de notification d'état comprend en outre une unité de détermination de retard (7) configurée pour déterminer si l'arrivée du passager est retardée sur la base de l'heure d'arrivée prévue, et
l'unité de notification (4) réalise la notification d'un retard du passager si l'arrivée du passager est retardée.

5. Appareil de notification d'état selon l'une quelconque des revendications 1 à 4,
dans lequel les informations de destination d'arrivée comportent des informations concernant la personne concernée, et
l'unité de notification (4) réalise la notification à une destination de notification obtenue sur la base des informations concernant la personne concernée.

6. Procédé de notification d'état **caractérisé par** :
l'acquisition, en tant qu'informations biologiques, de données d'image de visage d'un passager d'un véhicule, les données d'image de visage ayant été acquises au niveau de chacun d'une pluralité d'emplacements où des procédures respectives ont lieu dans une installation de départ et d'arrivée du véhicule ;
l'acquisition, à partir d'un dispositif de stockage (52) dans lequel, pour chaque passager, les informations de destination d'arrivée concernant une destination d'arrivée du véhicule, les données d'image de visage du passager, et les informations d'identification pour identifier le passager sont stockées en association les unes avec les autres à l'avance, des informations d'identification et des informations de destination d'arrivée correspondant aux données d'image de visage qui concordent avec les données d'image de visage acquises ;
l'acquisition d'un état de mouvement du passager ; et
la réalisation de la notification de l'état de mouvement acquis, des informations d'identification acquises, et des données d'image acquises à une personne concernée par le passager au niveau d'une destination d'arrivée sur la base des informations de destination d'arrivée acquises,
dans lequel l'acquisition d'un état de mouvement du passager comprend la mise à jour de l'état de mouvement à chaque fois que les données d'image de visage sont acquises.

7. Procédé de notification d'état selon la revendication 6,
dans lequel le véhicule est un aéronef, et
l'installation d'arrivée et de départ est un aéroport.

8. Procédé de notification d'état selon la revendication 7,
dans lequel, lors de l'acquisition des données d'image de visage, les données d'image de visage sont acquises à partir d'un dispositif de capture d'image (51) installé au niveau d'une porte d'embarquement, d'un dépôt de bagages, d'une porte d'arrivée, ou d'une zone de retrait des bagages, et
lors de l'acquisition de l'état de mouvement, l'état de mouvement est acquis sur la base d'un emplacement au niveau duquel les données d'image de visage ont été acquises par le dispositif d'acquisition de capture d'image (51).

9. Procédé de notification d'état selon l'une quelconque des revendications 6 à 8,
dans lequel les informations de destination d'arrivée comportent une heure d'arrivée prévue du passager,
le procédé de notification d'état comprend en outre le fait de déterminer si l'arrivée du passager est retardée sur la base de l'heure d'arrivée prévue, et
lors de la notification à la personne concernée, la notification d'un retard du passager est réalisée si l'arrivée du passager est retardée.

10. Procédé de notification d'état selon l'une quelconque des revendications 6 à 9,
dans lequel les informations de destination d'arrivée comportent des informations concernant la personne concernée, et
lors de la notification à la personne concernée, la notification est réalisée à une destination de notification obtenue sur la base des informations concernant la personne concernée.

11. Programme pour amener un ordinateur à exécuter le procédé selon l'une quelconque des revendications 6 à 10.
